Europäisches Patentamt

European Patent Office

Office européen des brevets

(19)

(11) Veröffentlichungsnummer: **0 193 567**
**B1**

(12) **EUROPÄISCHE PATENTSCHRIFT**

(45) Veröffentlichungstag der Patentschrift:
09.12.87

(51) Int. Cl.⁴: **F 16 H 19/00, F 16 H 57/12**

(21) Anmeldenummer: **85904419.0**

(22) Anmeldetag: **27.08.85**

(86) Internationale Anmeldenummer:
**PCT/DE 85/00294**

(87) Internationale Veröffentlichungsnummer:
**WO 86/01869 (27.03.86 Gazette 86/7)**

(54) ANTRIEBSVORRICHTUNG ZUM SPIELFREIEN UMWANDELN EINER DREHBEWEGUNG IN EINE LINEARBEWEGUNG.

(30) Priorität: **07.09.84 DE 8426813 U**

(43) Veröffentlichungstag der Anmeldung:
**10.09.86 Patentblatt 86/37**

(45) Bekanntmachung des Hinweises auf die Patenterteilung:
**09.12.87 Patentblatt 87/50**

(84) Benannte Vertragsstaaten:
**AT BE CH DE FR GB IT LI LU NL SE**

(56) Entgegenhaltungen:
**DE - A - 2 910 373**
**FR - A - 2 219 342**
**GB - A - 2 130 682**
**US - A - 3 151 494**
**US - A - 3 399 578**
**US - A - 3 850 043**

(73) Patentinhaber: **Hamül Werkzeugfabrik Th. Kirschbaum KG, Meusselsdorfer Strasse 27, D-8590 Marktredwitz (DE)**

(72) Erfinder: **KÜSPERT, Max, Weiherwiesenweg 13, D-8590 Marktredwitz (DE)**

(74) Vertreter: **Voigt, Günter, Dipl.-Ing., Patentanwälte Dr.-Ing. Alfred Schulze, Dipl.-Ing. Günter Voigt & Partner Nordring 152, Postfach 210104, D-8500 Nürnberg 21 (DE)**

# Beschreibung

Die Erfindung bezieht sich auf eine Antriebsvorrichtung zum spielfreien Umwandeln einer Drehbewegung in eine Linearbewegung entsprechend den im Oberbegriff von Anspruch 1 enthaltenen Merkmalen.

Eine solche Antriebsvorrichtung ist aus der DE-A-29 10 373 grundsätzlich bekannt.

An die Leistungsfähigkeit und Genauigkeit von Mess- und Werkzeugmaschinen, bei denen Schlitten, Supporte, Werkzeuge oder Werkzeugtische Linearbewegungen und bei Maschinen mit Kreuzschlitten gleichzeitige Bewegungen in Richtung der beiden Koordinaten ausführen müssen, sollen die Linearbewegungen nicht nur schnell, d.h. mit grossen Beschleunigungs- und Verzögerungswerten, sondern auch mit höchster Genauigkeit ausgeführt werden, um die gewünschten Fertigungstoleranzen einhalten zu können. Schliesslich soll die Bewegung dieser Maschinenteile schlupffrei, spielfrei, schwingungsfrei und bei der Massenfertigung unter reproduzierbaren Verhältnissen mit Hilfe von numerischen Steuerungen möglich sein. Hieraus ergeben sich in der Praxis wegen der hohen Beanspruchung der Bauteile für den linearen Antrieb unerwünschte Verschleisserscheinungen, die auf die Dauer Ungenauigkeiten und Streuungen bei der numerischen Einstellung der Schlitten oder Werkzeuge zur Folge haben. Die bekannten und üblicherweise zur Ausübung von linearen Verstellbewegungen verwendeten Antriebssysteme, die zum Beispiel aus Gewindespindeln, Kugelspindeln, Zahnstangen, hydraulischen oder pneumatischen Kolben oder Zahnriemen bestehen können, finden wegen der ihnen eigenen Eigenschaften alle ihre Anwendung, und zwar verständlicherweise immer dort, wo sich aufgrund der Anforderungen ihre günstigen Eigenschaften besonders vorteilhaft auswirken. Wenn es nun aber darum geht, einen Linearantrieb zu schaffen, bei dem alle Bedingungen möglichst in einem hohen Mass erfüllt werden, etwa bei einem grossen Verstellweg bei grosser Verstellgeschwindigkeit (etwa 1,0 m pro Sekunde) eine spielfreie, schwingungsfreie und genaue Einstellung zu erzielen, und zwar in ständig repetierbaren Abläufen, so scheiden praktisch die bekannten Antriebssysteme trotz ihrer spezifischen Vorteile aus, weil ihr Einsatz unter den beschriebenen Voraussetzungen ihre Nachteile derart anwachsen liesse, dass ein solcher Linearantrieb zur optimalen Lösung der Aufgaben von vornherein zum Scheitern verurteilt wäre.

Aus der US-PS 38 24 871 ist eine Vorrichtung bekannt, bei der ein Behälter mittels eines über Kettenzahnräder bewegten Kettentriebes in eine Hin- und Herbewegung versetzt wird, um Schüttgüter relativ gleichmässig in einem Speicher zu verteilen. Eine Präzisionsbewegung und -positionierung lässt sich mit dieser bekannten Vorrichtung nicht erzielen. Insbesondere bei einem Wechsel der Bewegungsrichtung stört das bei dieser Vorrichtung erforderliche Spiel zwischen den miteinander im Eingriff stehenden Elementen. Die aus der US-PS 38 50 043 bekannte und mit einem Zahnriemen arbeitende Antriebsvorrichtung verfügt über eine gesonderte Einstelleinrichtung zur Beseitigung des Spiels des Zahnriemens. Das Spiel zwischen Zahnriemen und Zahnstange kann damit jedoch nicht beseitigt werden. Je nach Länge des Zahnriemens, d.h. je nach Stellung des Schlittens, treten bei gleicher Krafteinwirkung unterschiedliche Längenänderungen des Zahnriemens auf. Damit ergeben sich Positionierungsungenauigkeiten, die bei einer NC-Werkzeugmaschine nicht toleriert werden können.

Der Erfindung liegt die Aufgabe zugrunde, eine Antriebsvorrichtung zum spielfreien Umwandeln einer Drehbewegung in eine Linearbewegung zu schaffen, mit der Werkzeugschlitten oder andere zu positionierende Elemente über grosse bis grösste Längen spiel- und schlupffrei mit niedrigem Massenträgheitsmoment bei grosser Einstellgenauigkeit linear bewegt werden können, wobei die Antriebsvorrichtung darüber hinaus besonders servicefreundlich sein soll.

Die Lösung dieser Aufgabe erfolgt erfindungsgemäss durch die im kennzeichnenden Teil des Anspruchs 1 angegebenen Massnahmen.

Vorteilhafte Weiterbildungen ergeben sich aus den Unteransprüchen.

Zahnriemen, insbesondere Kunststoffzahnriemen, können hinsichtlich Zahnform und Zahnteilung mit grosser Genauigkeit hergestellt werden, sind hinreichend flexibel, verschleissfest und geräuscharm und haben einen günstigen Wirkungsgrad. Sie werden auch in endloser Ausführung hergestellt und können sowohl mit Stahldrahtseele als auch mit Glasfaserarmierung versehen sein.

Die Erfindung wird nachfolgend unter Bezugnahme auf die Zeichnungsfiguren beispielsweise erläutert. Es zeigen:

Fig. 1 eine schematische Darstellung der wesentlichen Elemente der Antriebsvorrichtung, und

Fig. 2 eine schematische Darstellung der Antriebsvorrichtung mit zusätzlichen Einzelheiten.

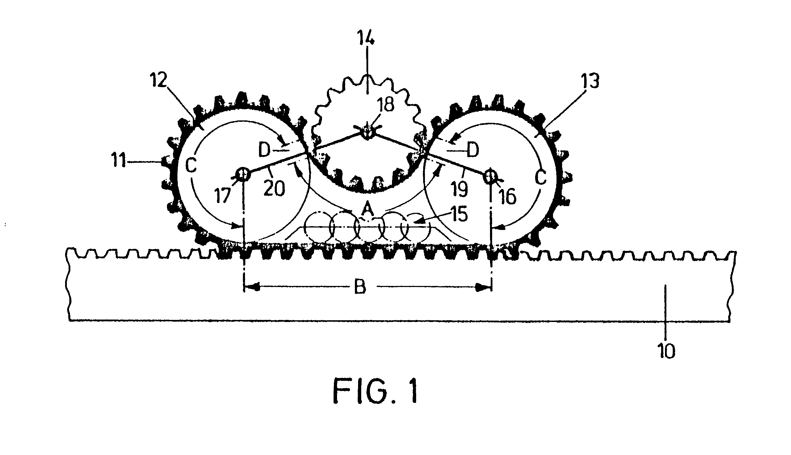

Die in Fig. 1 dargestellte Antriebsvorrichtung besteht im wesentlichen aus einer Zahnstange 10, einem endlosen Zahnriemen 11, zwei Umlenkrollen 12 und 13 sowie einem Antriebszahnrad 14, das in an sich bekannter Weise durch einen Motor angetrieben wird. Der Zahnriemen 11 wird über die Umlenkrollen 12 und 13 in die Verzahnung oder Zahnstange 10 gepresst. Damit ist über eine hinreichende Länge B ein ausreichender Eingriff des Zahnriemens 11 in die Zahnstange 10 gewährleistet. In einem Bereich A erfolgt der Eingriff des Antriebszahnrades 14 in den Zahnriemen 11. In einem weiteren mit C bezeichneten Bereich liegt der Zahnriemen 11 mit seiner nicht verzahnten Rückseite kraftschlüssig auf dem Umfang der Umlenkrollen 12 bzw. 13 auf. Lediglich in dem mit D bezeichneten Bereich ist eine freie Dehnung des Zahnriemens 11 möglich. Dieser Bereich kann jedoch – wie die Zeichnung ohne weiteres erkennen lässt – durch entsprechende Massnahmen praktisch zu Null gemacht werden, so dass dann freie Dehnungen des Zahnriemens 11 ausgeschlossen sind. Hierzu ist es lediglich erforderlich, das Antriebszahnrad 14 im Verhältnis zu den Umlenkrollen 12 und 13 so anzuordnen, dass es sehr tief zwischen den Umlenkrollen 12 und 13 zu liegen kommt. In den Bereichen C ist lediglich dann ein Schlupf möglich, wenn die Ruhreibung zwischen dem Rücken des Zahnriemens 11 und den Umlenkrollen 12 bzw. 13 überschritten wird. Durch entsprechende Wahl der Reibungsverhältnisse ist dies im normalen Betrieb jedoch ausgeschlossen. Lediglich bei Auftreten von Stössen erfolgt kurzzeitig ein Schlupf, der zu einem Abbau der Stossenergie führt. Anschliessend sind jedoch die gewünschten Präzisionsverhältnisse sofort wieder gegeben. Auch die kurzzeitig verlorengehende Zuordnung zwischen der Position des Antriebszahnrades 14 und der Position der gesamten Antriebsvorrichtung ist nach Abklingen der Stossbelastung sofort wieder gegeben.

Die in Fig. 1 prinzipiell dargestellte Antriebsvorrichtung hat den grossen Vorteil, dass nicht nur der Zahnriemen 11 mit den Umlenkrollen 12 und 13 ohne weiteres von der Zahnstange 10 abgehoben werden kann und darüber hinaus auch mehrere solcher Antriebsvorrichtungen auf einer einzigen Zahnstangenanordnung betrieben werden können, sondern, dass darüber hinaus auch der eigentliche Antrieb mit dem Antriebszahnrad 14 ohne grössere Montagearbeiten vom Rest der Antriebsvorrichtung getrennt werden kann. Die Fig. 1 lässt dieses ohne weiteres erkennen.

Selbstverständlich können auch mehrspurige Systeme mit der betriebenen Antriebsvorrichtung ausgestattet werden. So ist es beispielsweise ohne weiteres möglich, ein Portal mit zwei oder mehr Zahnstangen 10 und entsprechender Anzahl von Zahnriemenantrieben zu betreiben.

Variationsmöglichkeiten des vorstehend beschriebenen grundsätzlichen Aufbaus ergeben sich dadurch, dass im Eingriffsbereich B zwischen Zahnstange 10 und Zahnriemen 11 im Bereich zwischen den Umlenkrollen 12 und 13 eine Andrückkufe 15 vorgesehen wird, die den Zahnriemen 11 von seiner Rückseite her an die Zahnstange 10 andrückt. Zur Verminderung der Reibung kann dabei in der Berührungsfläche der Andrückkufe 15 eine Vielzahl von Luftaustrittsöffnungen vorgesehen werden, die ein Luftpolster aufbauen und damit die Reibwirkung erheblich herabsetzen. Die Andrückkufe 15 kann auch ganz oder teilweise durch Andrückrollen ersetzt werden. So können insbesondere in Laufrichtung des Zahnriemens 11 zu beiden Seiten der Andrückkufe 15 solche Andrückrollen vorgesehen werden.

Die Achsen 16 und 17 der Umlenkrollen 13 bzw. 12 können über ein Gestell miteinander verbunden sein. Dabei kann es sich um ein festes, aber auch um ein gelenkiges Gestell handeln, das beispielsweise aus Gelenken 19 und 20 aufgebaut ist, wobei diese Gelenke direkt oder indirekt auch mit der Achse 18 des Antriebszahnrades 14 verbunden sein können. Eine Belastung der Achse 18 des Antriebszahnrades 14 mit einer senkrechten Kraft bewirkt dabei ein leichtes Auseinanderdrücken der Achsen 16 und 17 der Umlenkrollen 13 und 12 sowie ein tieferes Eindringen des Antriebszahnrades 14 in den Zwischenraum zwischen den Umlenkrollen 12 und 13.

Um Spielfreiheit zu erreichen, muss für optimalen Formschluss des Zahnriemens 11 mit der Zahnstange 10 gesorgt werden. Dies geschieht durch senkrechte Beweglichkeit der Zahnriemenführung in Gestalt von Andrückkufe 15, Andrückrollen oder ähnliches unter permanenter, mittig wirkender Andrückkraft. So kommt in jeder Lage der gesamte Eingriffsbereich zum Tragen. Andrückkufe 15 und Andrückrollen können beispielsweise unter Wirkung einer Federkraft in senkrechter Richtung beweglich angeordnet sein. Auch die Achsen 16 und 17 können in senkrechter Richtung beweglich angeordnet werden. So können etwaige Formfehler der Zahnstange 10 ausgeglichen werden.

Das Antriebszahnrad 14 kann axial zumindest einseitig mit einer Zylinderrolle 21 versehen sein, deren Durchmesser geringfügig grösser ist als der Kopfkreis des Antriebszahnrades 14. Bei entsprechend tiefem Eindringen des Antriebszahnrades 14 zwischen die Umlenkrollen 12 und 13 ist damit eine direkte Berührung der Zylinderrolle 21 mit den Umlenkrollen 12 und 13 möglich und damit eine Begrenzung des Eindringens des Antriebszahnrades 14 in den Zwischenraum zwischen den Umlenkrollen 12 und 13. Durch den sich dann ergebenden direkten Antrieb der Umlenkrollen 12 und 13 wird der Bereich C so ebenfalls für den Antrieb aktiviert.

Die Länge der Zahnstange 10 kann beliebig sein. Sie wird zu diesem Zweck aus Einzelstücken geeigneter Länge – ggf. unter Verbleiben geringer Lücken zwischen den einzelnen Zahnstangenabschnitten – derart zusammengesetzt, dass durch Wahl entsprechend grosser bzw. kleiner Lücken selbst Fertigungsfehler bei der Zahnstangenherstellung weitgehend ausgeglichen werden können.

Als Zahnriemen finden vorzugsweise solche Verwendung, die eine sogenannte Null-Lücke aufweisen, d.h. die ohne Spiel in die Zahnstangenprofile eingreifen. Es können aber auch geteilte Zahnstangenprofile Verwendung finden, die dann derartig gegeneinander verschoben werden, dass ein etwa vorhandenes Spiel ausgeglichen wird.

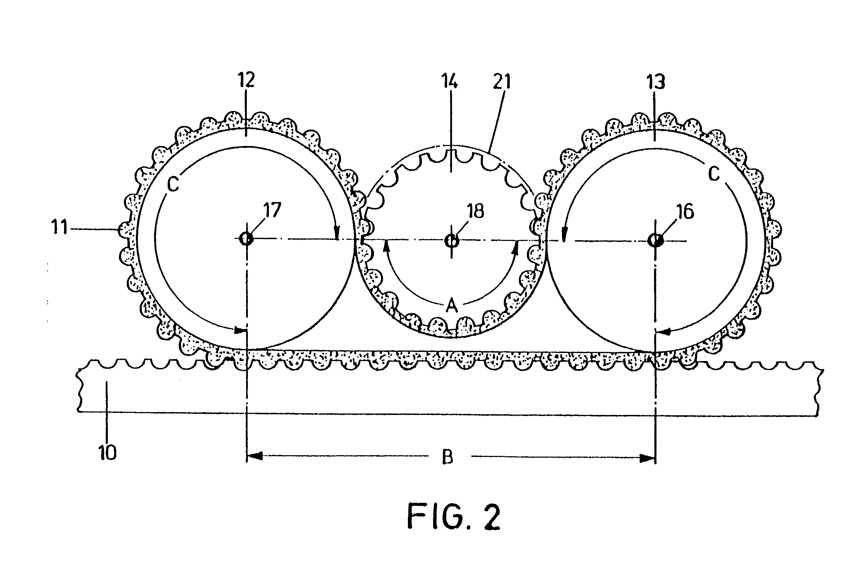

Bei Verwendung von Zahnprofilen mit geringem Flankenwinkel werden die Auftriebskräfte, die den Zahnriemen aus dem Zahnstangenprofil aufsteigen lassen wollen, sehr gering gehalten. Sehr vorteilhaft ist auch ein in Fig. 2 dargestelltes Zahnprofil mit halbkreisförmigem Zahnquerschnitt.

Die oben beschriebene Antriebsvorrichtung ist für numerisch gesteuerte Maschinen geeignet, weist eine praktisch unbegrenzte Hublänge auf, ermöglicht wegen der geringen Massen eine hohe Beschleunigung mit Stosskompensation, erlaubt eine Komponentenbauweise, bei der mehrere Antriebsvorrichtungen auf einem einzigen Zahnstangensystem eingesetzt werden können, erlaubt ohne weiteres auch die Brückenbauweise (Portalvorrichtungen) mit Zwillingsantrieb, ist sehr servicefreundlich wegen der leichten Austauschbarkeit sowohl der gesamten Vorrichtung als auch der Einzelteile der Vorrichtung, hat einen hohen Wirkungsgrad und eine lange Lebensdauer.

**Patentansprüche**

1. Antriebsvorrichtung zum spielfreien Umwandeln einer Drehbewegung in eine Linearbewegung mit Hilfe eines Zahnriemens (11) und eines mit diesem im Eingriff stehenden Antriebszahnrades (14), insbesondere für die schnelle und repetierbare Verstellung von Werkzeugen oder Werkzeugtischen, wobei mindestens eine in Verstellrichtung verlaufende Zahnstange (10) vorhanden ist, mit der der Zahnriemen (11) ständig in Eingriff ist, wobei zu beiden Seiten des Antriebszahnrades (14) Umlenkrollen (12,13) vorgesehen sind, die den Zahnriemen (11) so in Eingriff mit der Zahnstange (10) halten, dass ein bestimmter Abschnitt (3) die Belastung aufnimmt und nur ein kurzer, definierter Abschnitt (D) des Zahnriemens (11) ausser Eingriff mit der Verzahnung ist und wobei der Zahnriemen (11) als endlose Schleife ausgebildet ist, deren Rückseite die zwei Umlenkrollen (12, 13) kraftschlüssig umschling, dadurch gekennzeichnet, dass das Antriebszahnrad (14) von der der Zahnstange (10) abgewandten Seite der Schleife her zwischen den Umlenkrollen (12, 13) derart in den Zahnriemen (11) eingreift, dass nur ein vernachlässigbar geringer Abschnitt (D) des Zahnriemens (11) weder eine form- noch eine kraftschlüssige Abstützung besitzt.

2. Antriebsvorrichtung nach Anspruch 1, dadurch gekennzeichnet, dass das Antriebszahnrad (14) in axialer Richtung zumindest einseitig von einer Zylinderrolle (21) mit geringfügig grösserem Durchmesser als der Kopfkreis des Antriebszahnrades (14) begrenzt wird, wobei die Zylinderrolle (21) auf einer oder beiden Umlenkrollen (12, 13) abwälzt.

3. Antriebsvorrichtung nach einem der Ansprüche 1 oder 2, dadurch gekennzeichnet, dass die Achsen (16, 17) der Umlenkrollen (12, 13) über ein Gestell (19, 20) miteinander verbunden sind.

4. Antriebsvorrichtung nach Anspruch 3, dadurch gekennzeichnet, dass das Gestell in sich starr, jedoch insgesamt höhenbeweglich ist.

5. Antriebsvorrichtung nach Anspruch 3, dadurch gekennzeichnet, dass das Gestell ein Achsabstandsänderungen zulassendes gelenkiges Gestell (19, 20) ist.

6. Antriebsvorrichtung nach einem der Ansprüche 3 bis 5, dadurch gekennzeichnet, dass die Achse (18) des Antriebszahnrades (14) mit dem Gestell (19, 20) verbunden ist.

7. Antriebsvorrichtung nach einem der Ansprüche 1 bis 6, dadurch gekennzeichnet, dass im Eingriffsbereich zwischen Zahnriemen (11) und Zahnstange (10) zwischen den Umlenkrollen (12, 13) eine Andrückkufe (15) vorhanden ist, die den Zahnriemen (11) von seiner Rückseite her in die Verzahnung der Zahnstange (10) eindrückt.

8. Antriebsvorrichtung nach Anspruch 7, dadurch gekennzeichnet, dass die Andrückkufe (15) in ihrer Berührungsfläche mit luftpolsteraufbauenden Luftaustrittsdüsen versehen ist.

9. Antriebsvorrichtung nach Anspruch 7 oder 8, dadurch gekennzeichnet, dass Andrückrollen vorhanden sind, die die Andrückkufe (15) ganz oder teilweise ersetzen.

10. Antriebsvorrichtung nach einem der Ansprüche 1 bis 9, dadurch gekennzeichnet, dass es sich um einen Zahnriemen (11) mit geringem Flankenwinkel handelt.

11. Antriebsvorrichtung nach einem der Ansprüche 1 bis 9, dadurch gekennzeichnet, dass es sich um einen Zahnriemen (11) mit im wesentlichen halbkreisförmigen Zahnquerschnitten handelt.

**Claims**

1. Drive device for the blacklash-free conversion of a rotary movement into a linear movement with the aid of a toothed belt (11) and a driving pinion (14) standing in engagement therewith, in particular for the rapid and repeatable resetting of tools or tool tables, wherein at least one toothed rack (10) is present, which extends in resetting direction and with which the toothed belt (11) is constantly in engagement, wherein deflecting rollers (12, 13) are provided at both sides of the driving pinion (14) and so hold the toothed belt (11) in engagement with the toothed rack (10) that a certain portion (8) takes up the loading and only a short defined portion (D) of the toothed belt (11) is out of engagement with the toothing and wherein the toothed belt (11) is constructed as endless loop, the rear side of which force-lockingly winds around the two deflecting rollers, characterised thereby, that the driving pinion (14) engages into the toothed belt (11) between the deflecting rollers (12, 13) from that side of the loop, which is remote from the toothed rack (10), in such a manner that only a negligibly small portion (D) of the toothed belt (11) possesses neither a shape-locking nor a force-locking support.

2. Drive device according to claim 1, characterised thereby, that the driving pinion (14) is bounded in axial direction at least at one side by a cylindrical roller (21) of slightly greater diameter than the addendum circle of the driving pinion (14), wherein the cylindrical roller (21) rolls along one or both of the deflecting rollers (12, 13).

3. Drive device according to one of the claims 1 or 2, characterised thereby, that the axles (16, 17) of the deflecting rollers (12, 13) are each connected with the other through a frame (19, 20).

4. Drive device according to claim 3, characterised thereby, that the frame is in itself rigid, yet vertically movable as a whole.

5. Drive device according to claim 3, characterised thereby, that the frame is an articulated frame (19, 20) permitting changes in axial spacing.

6. Drive device according to one of the claims 3 to 5, characterised thereby, that the axle (18) of the driving pinion (14) is connected with the frame (19, 20).

7. Drive device according to one of the claims 1 to 6, characterised thereby, that a pressure pad (15), which presses the toothed belt (11) from its rear side into the toothing of the toothed rack (10), is present between the deflecting rollers (12, 13) in the region of engagement between the toothed belt (11) and the toothed rack (10).

8. Drive device according to claim 7, characterised thereby, that the pressure pad (15) is provided in its contact area with air exit nozzles building up an air cushion.

9. Drive device according to claim 7 or 8, characterised thereby, that contact pressure rollers are present, which entirely or partially replace the pressure pad (15).

10. Drive device according to one of the claims 1 to 9, characterised thereby, that a toothed belt (11) of small flank angle is concerned.

11. Drive device according to one of the claims 1 to 9, characterised thereby, that a toothed belt (11) is concerned with essentially half-circle tooth sections.

**Revendications**

1. Dispositif d'entraînement pour convertir, avec absence de jeu, un mouvement de rotation en un mouvement linéaire, à l'aide d'une courroie crantée (11) et d'une roue dentée menante (14) en prise avec cette dernière, en particulier pour le réglage rapide et répétitif d'outils ou de plateaux d'outillage, comportant au moins une crémaillère (10), s'étendant dans la direction du réglage et dans laquelle la courroie crantée (11) engrène en permanence, des rouleaux de renvoi (12, 13), prévus de part et d'autre de la roue dentée menante (14), maintenant la courroie crantée (11) en prise avec la crémaillère (10) de manière telle qu'un tronçon déterminé (B) absorbe la contrainte et que seulement une courte zone bien définie (D) de la courroie crantée (11) soit hors prise d'avec la denture, et la courroie crantée (11) étant réalisée sous la forme d'une boucle sans fin, dont la face postérieure enlace mécaniquement les deux rouleaux de renvoi (12, 13), caractérisé par le fait que la roue dentée menante (14) engrène dans la courroie crantée (11) à partir du côté de la boucle tourné à l'opposé de la crémaillère (10), entre les rouleaux de renvoi (12, 13), de telle sorte que seulement une zone négligemment petite (D) de la courroie crantée (11) ne soit soutenue ni par concordance de formes, ni mécaniquement.

2. Dispositif d'entraînement selon la revendication 1, caractérisé par le fait que la roue dentée menante (14) est délimitée dans le sens axial, au moins d'un côté, par un rouleau cylindrique (21) dont le diamètre est légèrement plus fort que le diamètre d'échanfrinement de la roue dentée menante (14), le rouleau cylindrique (21) roulant sur l'un des rouleaux de renvoi (12, 13), ou sur les deux.

3. Dispositif d'entraînement selon l'une des revendications 1 ou 2, caractérisé par le fait que les axes (16, 17) des rouleaux de renvoi (12, 13) sont reliés l'un à l'autre par l'intermédiaire d'un châssis (19, 20).

4. Dispositif d'entraînement selon la revendication 3, caractérisé par le fait que le châssis est par lui-même rigide, mais globalement mobile en hauteur.

5. Dispositif d'entraînement selon la revendication 3, caractérisé par le fait que le châssis est un châssis articulé (19, 20) autorisant des variations d'entr'axe.

6. Dispositif d'entraînement selon l'une des revendications 3 à 5, caractérisé par le fait que l'axe (18) de la roue dentée menante (14) est relié au châssis (19, 20).

7. Dispositif d'entraînement selon l'une des revendications 1 à 6, caractérisé par le fait qu'un patin presseur (15), intercalé entre les rouleaux de renvoi (12, 13) dans la zone d'engrènement entre la courroie crantée (11) et la crémaillère (10), pousse la courroie crantée (11), à partir de sa face postérieure, dans la denture de la crémaillère (10).

8. Dispositif d'entraînement selon la revendication 7, caractérisé par le fait que le patin presseur (15) est muni, dans sa surface de contact, d'ajutages de sortie d'air qui engendrent un coussin d'air.

9. Dispositif d'entraînement selon la revendication 7 ou 8, caractérisé par le fait qu'il comporte des galets presseurs qui remplacent totalement ou partiellement le patin presseur (15).

10. Dispositif d'entraînement selon l'une des revendications 1 à 9, caractérisé par le fait qu'il s'agit d'une courroie crantée (11) à faible angle de flancs.

11. Dispositif d'entraînement selon l'une des revendications 1 à 9, caractérisé par le fait qu'il s'agit d'une courroie crantée (11) avec des sections de dents essentiellement en forme de demi-cercles.

FIG. 1

0 193 567

FIG. 2